# EUROPEAN PATENT APPLICATION

(11) **EP 4 451 249 A1**
(43) Date of publication of application: **23.10.2024**
(21) Application number: 22907018.0
(22) Date of filing: 21.10.2022
(51) Int. Cl.: G09F 9/00, G06F 1/16, H05K 7/12, G02F 1/1333

(54) **ELECTRONIC APPARATUS**

(30) Priority: 15.12.2021 JP 2021202951; 04.04.2022 JP 2022062208
(71) Applicant: Casio Computer Co., Ltd., Tokyo 151-8543 (JP)
(72) Inventor: YUKI Koji, Hamura-shi, Tokyo 205-8555 (JP); EGUCHI Hiroki, Hamura-shi, Tokyo 205-8555 (JP)
(74) Representative: Grünecker Patent- und Rechtsanwälte PartG mbB
(86) International application number: PCT/JP2022/039346
(87) International publication number: WO 2023/112484

(57) **Abstract**

To suitably support a display unit. A scientific calculator 1 includes a liquid crystal display 2 and a protective panel 3 that supports a back surface of the liquid crystal display 2. The protective panel 3 includes a plurality of ribs 30 erected on a main surface opposite to the liquid crystal display 2, and a plurality of recesses 35 surrounded by the plurality of ribs 30. The plurality of recesses 35 include those having non-uniform sizes.

## Description

### TECHNICAL FIELD

The present invention relates to an electronic apparatus.

### BACKGROUND ART

Hitherto, in an electronic apparatus such as a scientific calculator, a protective panel for supporting a liquid crystal display may be disposed on a back surface of the liquid crystal display. As this type of protective panel, a protective panel made of aluminum is also suitably used, but a protective panel made of a resin is more preferable from the viewpoint of weight reduction.

In the protective panel made of a resin, a rib may be provided on a back surface of the protective panel for the purpose of improving a strength (rigidity) while reducing a weight. As such a rib, for example, a rib having a uniform pattern shape such as a honeycomb shape or a rhombus shape as described in Patent Literatures 1 and 2 is generally used.

### CITATION LIST

### PATENT LITERATURE

Patent Literature 1: JP 2012-10414 A
Patent Literature 2: JP H09-62400 A

### SUMMARY OF INVENTION

### TECHNICAL PROBLEM

However, it is difficult to say that the rib having the uniform pattern shape suitably copes with a load unevenly distributed on the protective panel.

The present invention has been made in view of the above circumstances, and an object of the present invention is to suitably support a display unit such as a liquid crystal display.

### SOLUTION TO PROBLEM

In order to achieve the above object, the present invention is characterized as including a display unit; and a support member that supports a back surface of the display unit, wherein the support member includes a plurality of ribs erected on a main surface opposite to the display unit, and a plurality of recesses surrounded by the plurality of ribs, and the plurality of recesses include recesses having non-uniform sizes.

### ADVANTAGEOUS EFFECTS OF INVENTION

According to the present invention, it is possible to suitably support a display unit.

### BRIEF DESCRIPTION OF DRAWINGS

Fig. 1 is a perspective view of a scientific calculator according to an embodiment.
Fig. 2A is a view of an upper half portion inside the scientific calculator when viewed from a back surface side, and Fig. 2B is a cross-sectional view taken along line II-II of Fig. 2A.
Fig. 3 is a view illustrating a deformation behavior analysis result of a protective panel.
Fig. 4 is a view illustrating a design load of topology analysis.
Fig. 5 is a view illustrating an analysis result of the topology analysis.
Fig. 6 is a view illustrating an analysis model of deformation amount analysis.
Fig. 7 is a view illustrating a deformation amount analysis result of a liquid crystal display.
Fig. 8 is a view illustrating a deformation amount analysis result of the protective panel.
Fig. 9 is a view of the inside of the scientific calculator in a case where a battery spring is disposed on the protective panel when viewed from the back surface side.

### DESCRIPTION OF EMBODIMENTS

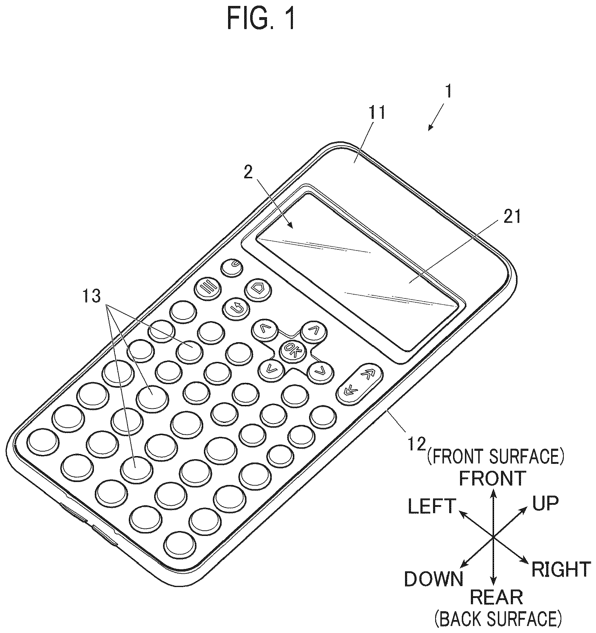

An embodiment of an electronic apparatus according to the present invention will be described with reference to Figs. 1 to 9.

Note that although various technically preferable limitations are given to the embodiment described below in order to carry out the present invention, the scope of the present invention is not limited to the following embodiment and illustrated examples.

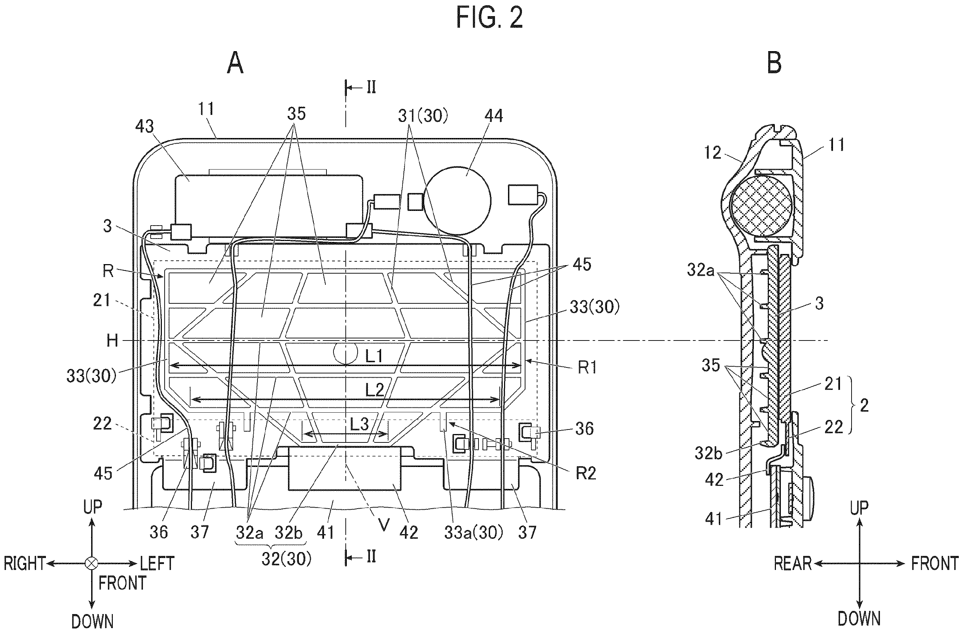

Fig. 1 is a perspective view of a scientific calculator 1 according to the present embodiment, Fig. 2A is a view of an upper half portion inside the scientific calculator 1 when viewed from a back surface side, and Fig. 2B is a cross-sectional view taken along line II-II of Fig. 2A.

Note that in the following description, front, rear, left, right, up, and down directions refer to the directions illustrated in the drawings. That is, a front-rear direction refers to a front surface-back surface direction (thickness direction) of the scientific calculator 1, a left-right direction refers to a width direction of the scientific calculator 1, and an up-down direction refers to a longitudinal direction of the scientific calculator 1.

As illustrated in Fig. 1, the scientific calculator 1 is an example of an electronic apparatus according to the present invention, and is formed in a rectangular plate shape elongated in the up-down direction. The scientific calculator 1 includes a front surface case 11 that covers a front surface and a back surface case 12 that covers a back surface (rear surface). In the front surface case 11, a liquid crystal display 2 on which various types of information are displayed and a plurality of operating buttons 13 for receiving user operations are disposed. The front surface case 11 and the back surface case 12 are engaged in the front-rear direction to constitute a housing of the scientific calculator 1.

As illustrated in Fig. 2, the liquid crystal display 2 and a protective panel 3 thereof are accommodated in the housing defined by the front surface case 11 and the back surface case 12.

The liquid crystal display 2 is an example of a display unit according to the present invention, and is disposed above the center of the scientific calculator 1 in the up-down direction. The liquid crystal display 2 includes a liquid crystal main body 21 and a connector portion 22.

The liquid crystal main body 21 is formed in a rectangular plate shape that is long in the left-right direction and short in the up-down direction, and a front display surface is exposed to the front of the scientific calculator 1 through the front surface case 11.

The connector portion 22 is a terminal portion of the liquid crystal display 2 for electrically connecting the liquid crystal main body 21 to a printed circuit board 41 on which a control circuit is mounted, and is provided on a lower side of the liquid crystal main body 21. The connector portion 22 is electrically connected to the printed circuit board 41 disposed below the liquid crystal display 2 via a flexible substrate 42 connected to a central portion in the left-right direction. The connector portion 22 is positioned on a front side of a rear surface of the liquid crystal main body 21 and is spaced apart from the protective panel 3.

The protective panel 3 is an example of a support member according to the present invention, and is formed in a rectangular plate shape slightly larger than the liquid crystal display 2. The protective panel 3 is disposed in such a way as to cover substantially the entire back surface (rear surface) of the liquid crystal display 2, and is attached to the rear surface of the liquid crystal main body 21 by a double-sided tape (not illustrated) to support the liquid crystal display 2. The protective panel 3 of the present embodiment is made of a resin (a resin is contained).

A portion of the rear surface of the protective panel 3 that corresponds to the liquid crystal display 2 is a reinforcing portion R having an increased rigidity, and a plurality of ribs 30 for reinforcement are erected. The reinforcing portion R of the present embodiment is formed in a horizontally symmetrical and vertically asymmetrical shape, and includes a first reinforcing portion R1 corresponding to a position of the liquid crystal main body 21 and a second reinforcing portion R2 provided at the center in the left-right direction below the first reinforcing portion R1.

Specifically, the plurality of ribs 30 include a plurality of first ribs 31 extending obliquely with respect to the up-down direction, a plurality of second ribs 32 parallel to the left-right direction, and two third ribs 33 parallel to the up-down direction.

In the present embodiment, four first ribs 31 are arranged symmetrically with respect to the left-right direction, that is, formed in a line-symmetric shape with respect to a horizontal center line V of the liquid crystal main body 21. Each of the plurality of first ribs 31 has a smaller inclination angle with respect to the up-down direction as the first rib 31 is closer to the horizontal center line V, and stands in the up-down direction.

The plurality of first ribs 31 are arranged asymmetrically with respect to the up-down direction. More specifically, each first rib 31 is bent toward the center in the left-right direction with a position on a vertical center line H of the liquid crystal main body 21 as a bending point, and is inclined in such a way as to approach the horizontal center line V as the distance from the vertical center line H increases. Although the first ribs 31 extend at substantially the same inclination angles above and below the bending point, a distance from the vertical center line H to a lower end is larger than a distance from the vertical center line H to an upper end. Therefore, each of the first ribs 31 is vertically asymmetric.

In the present embodiment, six second ribs 32 are arranged in the up-down direction at substantially equal intervals. However, only a length L3 of a lower end second rib 32b is as small as about 1/3 of lengths (L1 and L2) of the other second ribs 32a, and the lower end second rib 32b is disposed at the center in the left-right direction to connect lower ends of the four first ribs 31.

The two third ribs 33 are disposed at both left and right ends of the first reinforcing portion R1, and connect left and right ends of the five second ribs 32a. However, a lower end of each third rib 33 is bent in a chamfered shape and connected to the second rib 32a. A third rib 33a extends downward from the fifth second rib 32a from the top on each of the slightly outer sides of intersections with the first ribs 31 on both the left and right sides in the left-right direction, the third rib 33a being slightly shorter in the up-down direction. One end (lower end) of only the third rib 33a is not connected to the other ribs 30.

In the reinforcing portion R, a rectangular portion closed by the upper end, the fifth second rib 32a from the top, and the two left and right third ribs 33 is the first reinforcing portion R1, and a portion below the first reinforcing portion R1 is the second reinforcing portion R2.

By arranging the plurality of ribs 30 as described above, a plurality of recesses 35 surrounded by the plurality of ribs 30 are formed on the rear surface of the protective panel 3. That is, the plurality of recesses 35 are defined by the plurality of first ribs 31, the plurality of second ribs 32, and the two third ribs 33.

The plurality of recesses 35 are formed to be non-uniform in size, and in the present embodiment, the recesses 35 are substantially smaller in size as the distance from the horizontal center line V of the liquid crystal display 2 (the liquid crystal main body 21) increases. More specifically, among the plurality of recesses 35, a plurality of recesses 35 disposed near the center of the liquid crystal display 2 in a longitudinal direction are roughly distributed as compared with a plurality of recesses 35 disposed near both ends in the longitudinal direction. That is, the plurality of recesses 35 are arranged in such a way that the recesses 35 are more densely provided on left and right end sides than on the center side in the left-right direction.

It is sufficient if the plurality of recesses 35 include recesses having non-uniform sizes (different sizes), and the plurality of recesses 35 may include recesses having the same size.

A plurality of hooks 36 and extending portions 37 are provided on both left and right sides of a lower end portion of the protective panel 3 (both left and right sides of the second reinforcing portion R2).

The plurality of hooks 36 are used to lock lead wires (wire rods) 45. The lead wire 45 electrically connects a solar panel 43, a battery 44, and the like disposed above the protective panel 3 to the printed circuit board 41, and is routed on or beside the ribs 30. It is sufficient if the hook 36 is provided on at least one side of a portion of the protective panel 3 that corresponds to the connector portion 22 in the left-right direction.

The extending portions 37 extend downward from lower ends on both left and right sides of the protective panel 3 and support the printed circuit board 41.

Next, an analysis for obtaining a shape of the rib 30 will be described.

In the analysis, first, a deformation behavior of the protective panel 3 when an external force is applied to the scientific calculator 1 was confirmed. A simple flat plate model without the rib 30 was used as the protective panel 3, and calculation in a case where the protective panel 3 was dropped from each of the front surface side and the back surface side in a state of being accommodated in the scientific calculator 1 was performed.

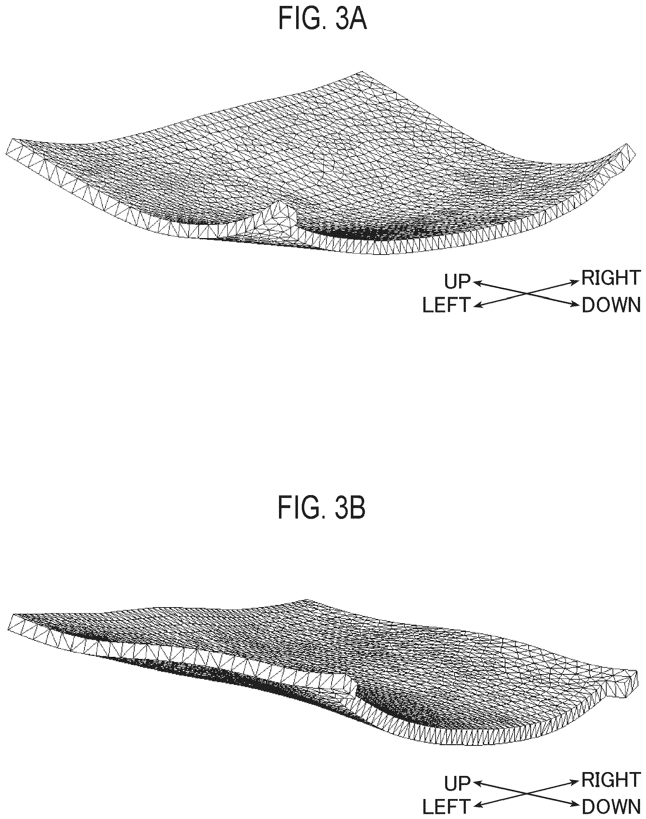

Figs. 3(a) and 3(b) illustrate main deformation behaviors of the protective panel 3 (analysis model) (deformation magnification: 50 times). As illustrated in Fig. 3, in a case where the scientific calculator 1 is dropped, the protective panel 3 is deformed in such a way that four corners of upper, lower, left, and right covers are lifted (Fig. 3A) or deformed in such a way that the center of the lower end is bent (Fig. 3B).

Next, an optimum shape of the protective panel 3 (the rib 30) was obtained by topology analysis.

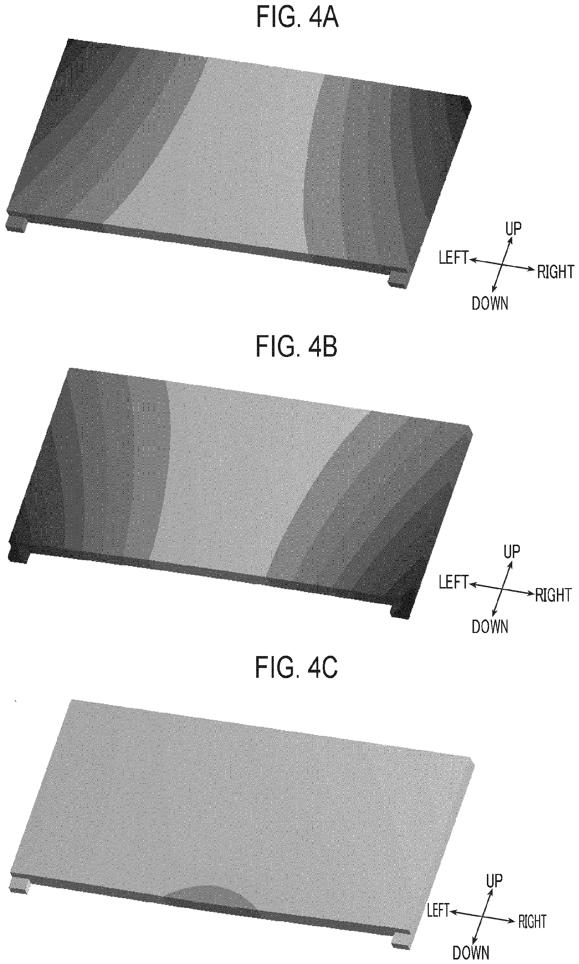

Here, a load simulating the deformation behavior of the protective panel 3 obtained above was set. As illustrated in Fig. 4, as the set load, a predetermined forward load was applied to each of both ends of an upper side of the protective panel 3 (Fig. 4A), both ends of a lower side of the protective panel 3 (Fig. 4B), and the center of the lower end of the protective panel 3 (Fig. 4C). An optimum shape when the surface of the flat plate model to which the set load is applied is thinned to a predetermined mass was obtained by the topology analysis.

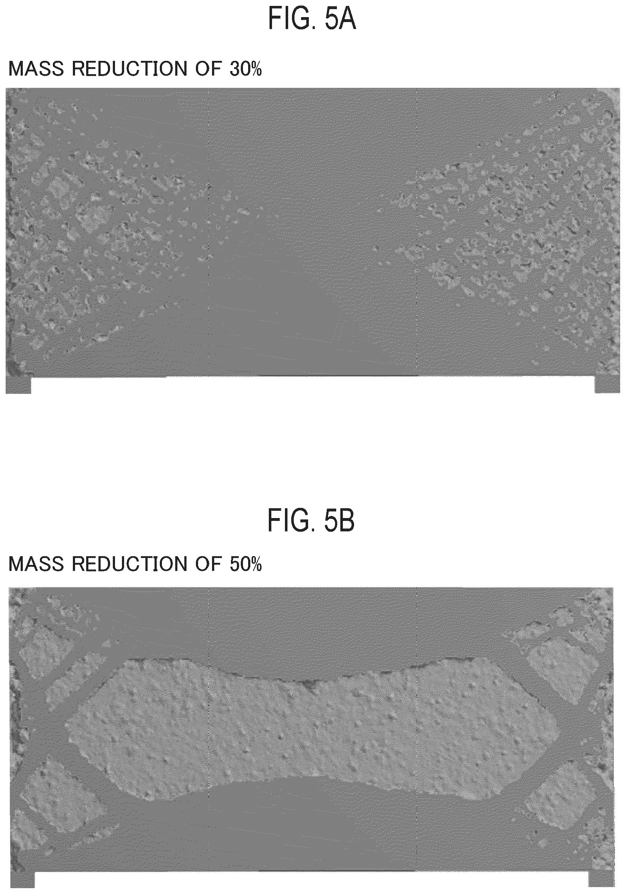

Analysis results are illustrated in Fig. 5. Figs. 5(a) and 5(b) illustrate thinned portions (portions with light colors) when a target mass is set to a mass reduction of 30% or a mass reduction of 50%. As illustrated in Figs. 5(a) and 5(b), a shape close to the protective panel 3 (the rib 30) of the present embodiment was obtained as an optimum shape when the thinning is made in such a way that the mass is reduced by 50%.

Next, analysis for evaluating the shape of the rib 30 will be described.

In the analysis, the shape of the protective panel 3 (the rib 30) of the present embodiment and a deformed shape thereof were evaluated by deformation amounts of the protective panel 3 itself and the liquid crystal display 2.

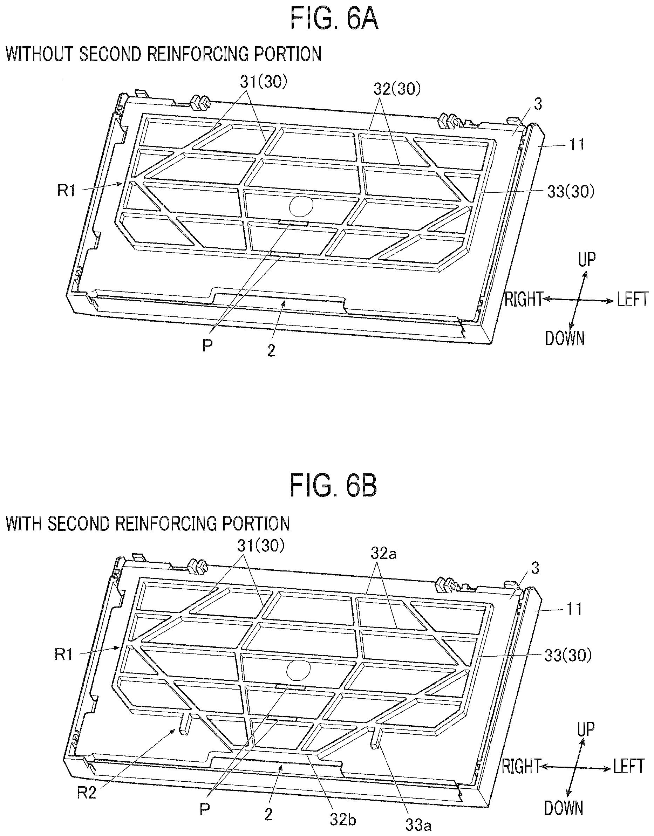

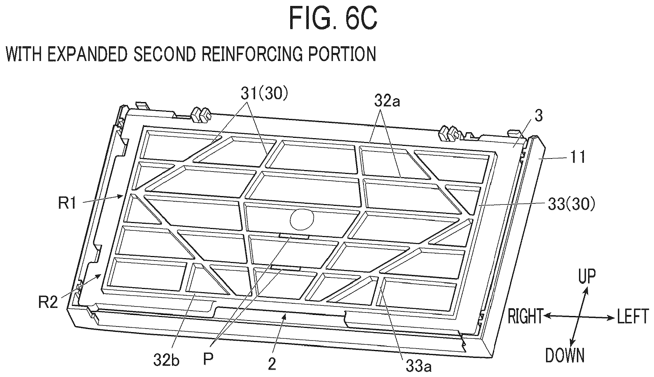

Analysis models are illustrated in Fig. 6. The analysis model includes the protective panel 3, the liquid crystal display 2, the front surface case 11 (only a portion around the protective panel 3), and the double-sided tape (for bonding the upper and lower ends of the liquid crystal main body 21 to the protective panel 3). However, the protective panel 3 is a model in which the hook 36 and the extending portion 37 are omitted. In addition, as the analysis models, a model without the second reinforcing portion R2 (Fig. 6A) and the model of the present embodiment (with the second reinforcing portion R2 (Fig. 6B)) and a model with the second reinforcing portion R2 expanded to have the same width as the first reinforcing portion R1 (Fig. 6C). For each of the analysis models, the deformation amount when a predetermined load is applied to a load point P at a lower portion of the center of the protective panel 3 was calculated.

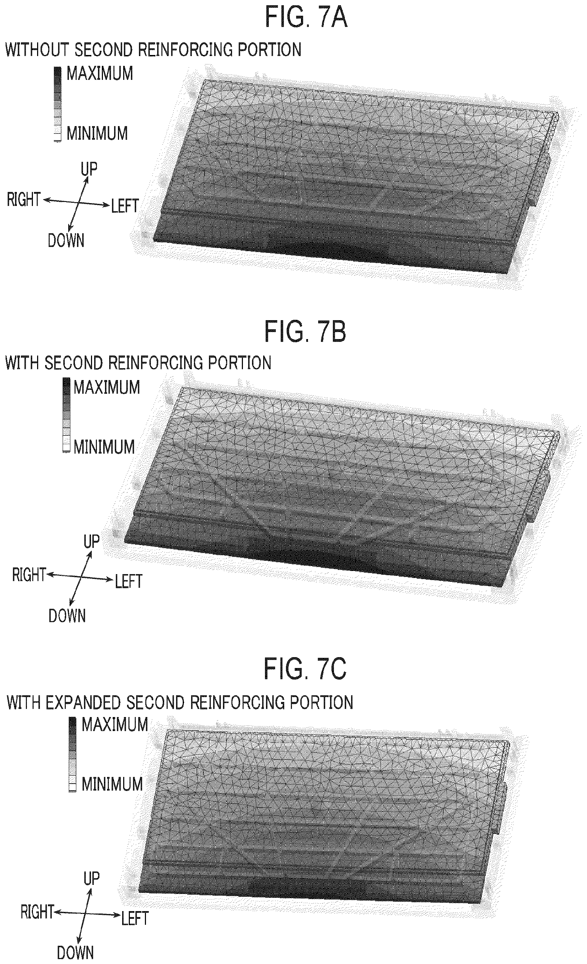

The deformation amount of the liquid crystal display 2 is illustrated in Fig. 7.

As illustrated in Fig. 7, the presence or absence of the second reinforcing portion R2 does not significantly affect the deformation amount of the liquid crystal display 2. However, when the second reinforcing portion R2 is expanded in the left-right direction (that is, at least the plurality of second ribs 32 have the same length in the left-right direction in the portion corresponding to the connector portion 22 and the portion corresponding to the liquid crystal main body 21), the deformation amount of the liquid crystal display 2 can be further decreased.

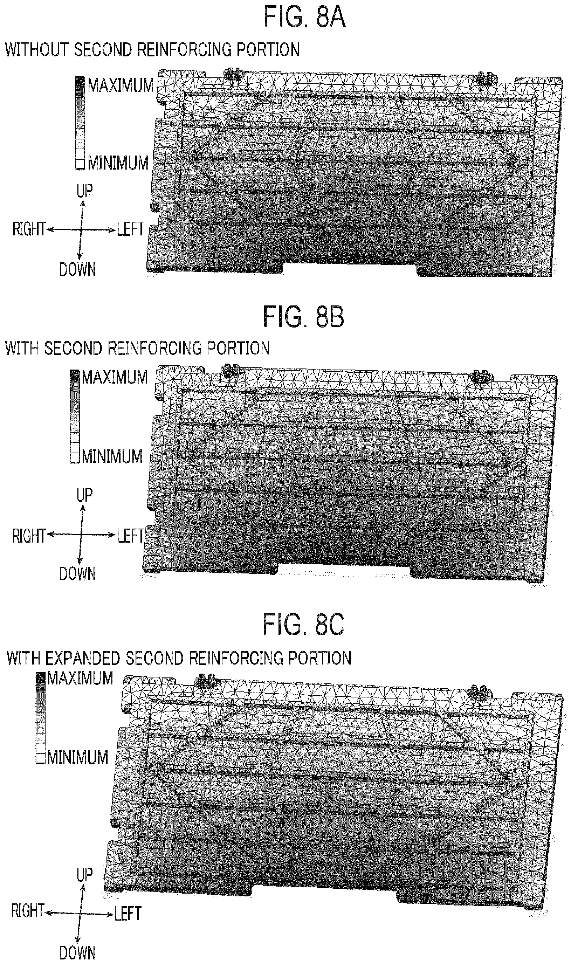

The deformation amount of the protective panel 3 is illustrated in Fig. 8.

As illustrated in Fig. 8, the presence or absence of the second reinforcing portion R2 does not significantly affect the deformation amount of the protective panel 3. However, when the second reinforcing portion R2 is expanded in the left-right direction, the deformation amount of the protective panel 3 can be further decreased, similarly to the liquid crystal display 2.

As described above, according to the present embodiment, the protective panel 3 that supports the liquid crystal display 2 includes the plurality of ribs 30 erected on the rear surface and the plurality of recesses 35 surrounded by the plurality of ribs 30, the plurality of recesses 35 including those having non-uniform sizes.

That is, the density of the recesses 35 can be different between a portion requiring a higher strength (rigidity) and a portion not requiring a higher strength (rigidity). This makes it possible to reduce the weight of the protective panel 3 while appropriately maintaining the rigidity of the protective panel 3, unlike the technology according to the related art in which ribs having a uniform pattern shape are erected.

Therefore, the liquid crystal display 2 can be suitably supported.

Here, the "size" of the recess 35 may include a concept of a volume in consideration of the height of the rib 30 in addition to the area of the recess 35 surrounded by the ribs 30.

Further, according to the present embodiment, among the plurality of recesses 35, the recesses 35 disposed near the center of the liquid crystal display 2 in the longitudinal direction are roughly distributed as compared with the recesses 35 disposed near both ends in the longitudinal direction.

As a result, it is possible to reduce the weight of the central portion of the protective panel 3 in the left-right direction to which a larger load is applied while increasing the rigidity of both of the left and right sides of the protective panel 3 to which a smaller load is applied.

According to the present embodiment, among the plurality of second ribs 32, the second rib 32b corresponding to the connector portion 22 is shorter in the left-right direction than the second rib 32a corresponding to the liquid crystal main body 21.

As a result, the hook 36 for locking the lead wire 45 can be provided at a lower portion of the protective panel 3 that corresponds to the connector portion 22. As a result, the lead wire 45 does not interfere during assembly work or the like, and work efficiency of assembly or the like is improved as compared with a case where the hook 36 is not provided. Further, it is possible to suppress an occurrence of a manufacturing defect in which the lead wire 45 is caught when the front surface case 11 and the back surface case 12 are closed.

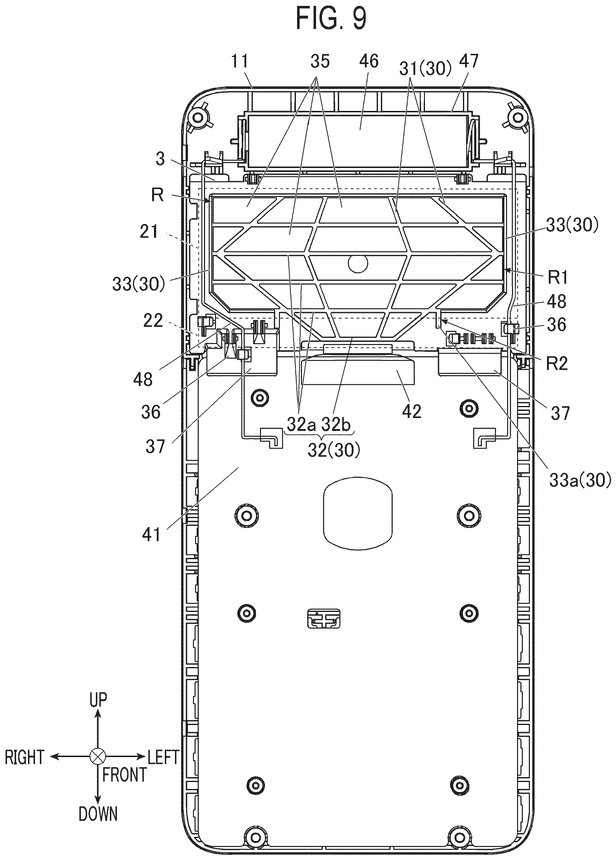

In addition, according to the present embodiment, since the protective panel 3 is made of a resin (a resin is contained), it is not necessary to perform insulation processing on, for example, a metal battery spring or the like extending from a battery box. That is, since the metal battery spring does not have a coating film, in a case of a metal protective panel, at least a portion in contact with the battery spring needs to be insulated. In this regard, in the protective panel 3 made of a resin (a resin is contained), for example, even in a case where a battery box 47 accommodating a dry battery 46 is disposed as illustrated in Fig. 9, a battery spring 48 extending from the battery box 47 can pass on the protective panel 3 without requiring insulation (coating) processing. In this case, since the battery spring 48 is routed instead of the lead wire 45 in the present embodiment, the battery spring 48 can be suitably organized by shortening the second rib 32b in the left-right direction and providing the hook 36 as in a case of the lead wire 45.

In a case of using the dry battery 46, the reason for using the battery spring 48 instead of the lead wire 45 is to enable soldering by an automatic machine and to reduce an assembly time required for wiring. Since the shape of the lead wire 45 is freely changeable, it takes time to wire the lead wire in such a way as not to cause an assembly failure. In this regard, in a case of using the battery spring 48, the cost of the component itself slightly increases, but a work time at the time of assembly can be shortened, so that it is possible to achieve overall cost reduction.

Note that an embodiment to which the present invention can be applied is not limited to the above-described embodiment, and it goes without saying that various modifications can be made without departing from the gist of the present invention.

For example, specific shapes (arrangement, positions, quantities, and the like) of the plurality of ribs 30 (recesses 35) are not limited to those of the above embodiment, and it is sufficient if the plurality of recesses 35 include those having non-uniform sizes.

Further, in the present embodiment, a pattern of the recesses 35 in which the recesses 35 are more densely provided on both end sides of the liquid crystal display 2 in the longitudinal direction is mainly adopted based on a result of the topology analysis, but the pattern of the recesses 35 in which the recesses 35 are more densely provided near the center according to a difference in liquid crystal to be protected or housing may be adopted.

In addition, the electronic apparatus according to the present invention is not limited to a scientific calculator (electronic desktop calculator), and can be widely applied to general electronic apparatuses including a display unit, such as an electronic dictionary and a smartphone.

In addition, the display unit according to the present invention is not limited to a liquid crystal display unit.

Although some embodiments of the present invention have been described above, the scope of the present invention is not limited to the above-described embodiments, and includes the scope of the invention described in the claims and the equivalent scope thereof.

### INDUSTRIAL APPLICABILITY

The present invention is applicable to an electronic apparatus by enabling suitable support for a display unit such as a liquid crystal display.

### REFERENCE SIGNS LIST

- 1: Scientific calculator (electronic apparatus)
- 2: Liquid crystal display (display unit)
- 3: Protective panel (support member)
- 11: Front surface case
- 12: Back surface case
- 21: Liquid crystal main body (main body portion)
- 22: Connector portion
- 30: Rib
- 31: First rib
- 32, 32a, 32b: Second rib
- 33, 33a: Third rib
- 35: Recess
- 36: Hook
- 41: Printed circuit board
- H: Vertical center line
- V: Horizontal center line
- R: Reinforcing portion
- R1: First reinforcing portion
- R2: Second reinforcing portion

## Claims

1. An electronic apparatus comprising:
a display unit; and
a support member that supports a back surface of the display unit, wherein
the support member includes a plurality of ribs erected on a main surface opposite to the display unit, and a plurality of recesses surrounded by the plurality of ribs, and
the plurality of recesses include recesses having non-uniform sizes.

2. The electronic apparatus according to claim 1, wherein
among the plurality of recesses, a plurality of recesses disposed near a center of the display unit in a longitudinal direction are roughly distributed as compared with a plurality of recesses disposed near both ends of the display unit in the longitudinal direction.

3. The electronic apparatus according to claim 1 or 2, wherein
the plurality of ribs include a plurality of first ribs extending obliquely with respect to a first direction corresponding to a lateral direction of the display unit, and
the plurality of first ribs are arranged asymmetrically with respect to the first direction.

4. The electronic apparatus according to claim 3, wherein
the plurality of first ribs are arranged symmetrically with respect to a second direction corresponding to a longitudinal direction of the display unit, the longitudinal direction being orthogonal to the lateral direction.

5. The electronic apparatus according to claim 3, wherein
the plurality of ribs include a plurality of second ribs parallel to a second direction corresponding to a longitudinal direction of the display unit, the longitudinal direction being orthogonal to the lateral direction, and
the plurality of recesses include recesses defined by the plurality of first ribs and the plurality of second ribs.

6. The electronic apparatus according to claim 1, wherein
the support member contains a resin.

7. The electronic apparatus according to claim 6, wherein
the display unit includes a connector portion on one side in a lateral direction and at a central portion in a longitudinal direction,
the connector portion is further spaced apart from the support member than a main body portion of the display unit,
the plurality of ribs include a plurality of second ribs parallel to a second direction corresponding to the longitudinal direction, and
in the plurality of second ribs, a portion corresponding to the connector portion and a portion corresponding to the main body portion have the same length in the longitudinal direction.

8. The electronic apparatus according to claim 6, wherein
the display unit includes a connector portion on one side in a lateral direction and at a central portion in a longitudinal direction,
the connector portion is further spaced apart from the support member than a main body portion of the display unit,
the plurality of ribs include a plurality of second ribs parallel to a second direction corresponding to the longitudinal direction, and
in the plurality of second ribs, a portion corresponding to the connector portion is shorter than a portion corresponding to the main body portion in the longitudinal direction.

9. The electronic apparatus according to claim 8, wherein
the support member includes a hook for locking a wire rod on at least one side of the portion corresponding to the connector portion in the longitudinal direction.

10. The electronic apparatus according to claim 8, wherein
each of the plurality of ribs is arranged based on a result of topology analysis.
